Europäisches Patentamt

European Patent Office

Office européen des brevets

(19)

(11) **EP 1 120 149 A1**

(12) **DEMANDE DE BREVET EUROPEEN**

(43) Date de publication:
**01.08.2001 Bulletin 2001/31**

(51) Int Cl.$^7$: **B01D 53/04**, B01J 20/20, B01J 20/28

(21) Numéro de dépôt: **01400003.8**

(22) Date de dépôt: **03.01.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **25.01.2000 FR 0000948**

(71) Demandeur: **L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventeurs:
• **Monereau, Christian**
**75011 Paris (FR)**
• **Moreau, Serge**
**78140 Velizy Villacoublay (FR)**

(74) Mandataire: **Pittis, Olivier et al**
**L'Air Liquide, S.A.,**
**Service Brevets & Marques,**
**75, Quai d'Orsay**
**75321 Paris Cedex 07 (FR)**

(54) **Procédé de purification d'un gaz par adsorption des impuretés sur plusieurs charbons actifs**

(57) L'invention concerne un procédé pour la purification d'un flux gazeux contenant une ou des impuretés gazeuses du groupe formé par le dioxyde de carbone, la vapeur d'eau, le $H_2S$, les alcools, le $SO_2$ et les hydrocarbures linéaires, ramifiés ou cycliques, saturés ou insaturés en $C_1$-$C_8$. Le flux gazeux est mis en contact avec plusieurs adsorbants carbonés poreux différents, c'est-à-dire des charbons actifs ayant des propriétés et caractéristiques différentes. Le gaz est de l'air, de l'azote, de l'hydrogène produit par reformage ou craquage d'ammoniac ou craquage d'alcools ou d'hydrocarbures, du gaz naturel, du gaz de combustion ou de fermentation.

FIG. Unique

## Description

La présente invention concerne le domaine de la purification d'un gaz ou mélange gazeux par adsorption des impuretés qui s'y trouvent sur un adsorbant carboné formé d'une association de plusieurs charbons actifs différents, en particulier un procédé PSA pour purifier un gaz, tel de l'hydrogène, de l'azote, de l'oxygène, du monoxyde de carbone, de l'argon, du méthane ou les mélanges gazeux les contenant.

Une unité PSA (Pressure Swing Adsorption = Adsorption avec modulation de pression) de purification de gaz contient habituellement un adsorbant ou une combinaison d'adsorbants qui doit être capable de retenir sélectivement les impuretés contenues dans le gaz à traiter.

Les procédés et unités PSA se sont révélés très efficaces pour la séparation de mélanges gazeux et notamment pour l'obtention d'oxygène ou d'azote à partir d'air et surtout pour la production d'hydrogène pur à partir de mélanges gazeux contaminés par diverses impuretés.

En effet, la production d'hydrogène de pureté élevée est d'un grand intérêt sur le plan industriel, celui-ci étant largement utilisé dans de nombreux procédés de synthèse tels que l'hydrocraquage, la production de méthanol, la production d'oxoalcools et les procédés d'isomérisation.

De façon générale, les procédés PSA mettent à profit la sélectivité d'adsorption d'un adsorbant donné pour une ou plusieurs des substances contaminantes du mélange gazeux à purifier.

Ainsi, dans le cas de la purification d'hydrogène, les impuretés devant être habituellement éliminées sont : la vapeur d'eau ; le $CO_2$ ; le CO, l'azote, les hydrocarbures linéaires, ramifiés ou cycliques, saturés ou insaturés comportant un ou plusieurs atomes de carbone dans leur structure hydrocarbonée, par exemple les composés en $C_1$-$C_8$, tels que $CH_4$, $C_2H_4$, $C_2H_6$, $C_3H_8$, les composés BTX (benzène-toluène-xylène) ; les mercaptans ; le $H_2S$ ; le $SO_2$ , le chlore, l'ammoniac, les amines ; les alcools, par exemple les alcools légers en $C_1$-$C_3$ ; d'autres composés organiques volatils, tels les esters, les éthers et les composés halogénés.

Ces composés sont généralement éliminés par un ensemble d'adsorbants, c'est-à-dire de couches d'adsorbants placées en série. Ainsi, on utilise classiquement de l'alumine ou du gel de silice pour retenir en particulier la vapeur d'eau ; du charbon activé pour retenir en particulier les hydrocarbures, le $CO_2$ et la vapeur d'eau ; et de la zéolite pour éliminer les impuretés peu adsorbables, tels le CO et l'azote.

Habituellement, les adsorbants sont placés dans un mais plus habituellement plusieurs adsorbeurs fonctionnant en alternance.

La proportion des différents adsorbants au sein du lit d'adsorbant composite dépend de la composition du gaz à traiter et de la pression, et il existe donc un grand nombre de combinaisons possibles d'adsorbants composites.

Habituellement, une unité PSA $H_2$ met en oeuvre, au sein de chaque adsorbeur, un cycle de pression comportant de façon schématique :

- . une phase de production sensiblement isobare à la pression haute du cycle d'adsorption,
- . une phase de régénération de l'adsorbant comprenant au moins une étape de décompression à co-courant par équilibrage de pression avec un autre adsorbeur ; une étape de dépressurisation finale à contre-courant avec évacuation de gaz résiduaire ; et généralement une étape d'élution à la pression basse du cycle , le gaz d'élution provenant d'au moins une deuxième étape de décompression à co-courant d'un adsorbeur ; et
- . une phase de repressurisation comprenant au moins une étape d'équilibrage de pression avec un autre adsorbeur et une étape de recompression finale au moyen de gaz de production.

De façon générale , les cycles peuvent comprendre plusieurs étapes d'équilibrage, total ou partiel, préférentiellement de 1 à 4 étapes d'équilibrage. Les transferts gazeux peuvent s'effectuer directement d'adsorbeur à adsorbeur ou par l'intermédiaire d'une ou plusieurs capacités de stockage de gaz. Les étapes de recompression par équilibrage et de recompression par le gaz de production peuvent être ou non au moins partiellement simultanées, et comporter éventuellement une repressurisation partielle par de l'alimentation en gaz. Des étapes complémentaires de balayage peuvent être introduites, en particulier si on veut récupérer pour la valoriser une autre fraction du gaz à traiter différente de l'hydrogène. De plus, le cycle peut également comporter des temps d'attente durant lesquels les adsorbeurs sont isolés.

Classiquement, la pression d'adsorption est comprise entre 5 bars et 70 bars, de préférence entre 15 bars et 40 bars ; la pression de désorption est comprise entre 0.1 bar et 10 bars, de préférence entre 1 et 5 bars ; et la température du flux d'hydrogène à purifier est comprise entre -25 °C et + 60°C, de préférence entre + 5°C et + 35°C.

Ceci est d'ailleurs illustré, par exemple, par les documents US-A-3,702,525, US-A-3,986,849, US-A-4,077,779, US-A-4,153,428, US-A-4,696,680, US-A-4,813,980, US-A-4,963,339, US-A-3,430,418, US-A-5,096,470, US-A-5,133,785, US-A-5,234,472, US-A-5,354,346, US-A-5,294,247 et US-A-5,505,764, qui décrivent des cycles de fonctionnement de procédés PSA pour produire de l'hydrogène.

Les impuretés sont éliminées par un ou plusieurs adsorbants placés en série depuis l'amont de l'adsorbeur, c'est-à-dire le côté où se fait l'entrée des gaz à traiter dans ledit adsorbeur. De façon générale, le choix et la proportion de ou des adsorbants à mettre en oeuvre dépendent de la nature ou composition du mélange gazeux à traiter et de la pression

En outre, on peut citer le document WO-A-97/45363 qui porte sur un procédé pour la purification de mélanges gazeux à base d'hydrogène, pollués par diverses impuretés, dont du monoxyde de carbone et au moins une autre impureté choisie parmi le dioxyde de carbone et les hydrocarbures linéaires, ramifiés ou cycliques, saturés ou insaturés en $C_1$-$C_8$. Le flux de gaz à purifier est mis en contact, dans une zone d'adsorption, avec un premier adsorbant sélectif du dioxyde de carbone et des hydrocarbures en $C_1$-$C_8$, et un second adsorbant qui est une zéolite du type faujasite échangée à au moins 80% au lithium et dont le rapport Si/Al est inférieur à 1,5, pour éliminer au moins le monoxyde de carbone (CO). Selon ce document, l'amélioration apportée par le procédé est due à l'utilisation d'une zéolite particulièrement efficace, à savoir une zéolite X échangée au lithium.

Le document US-A-3,150,942 enseigne, quant à lui, l'utilisation d'une zéolite contenant des cations sodium ou des cations sodium et calcium pour purifier un flux d'hydrogène.

De manière analogue, le document US-A-4,477,267 décrit un procédé de purification d'hydrogène mettant en oeuvre une zéolite X échangée de 70 à 90% avec des cations calcium et contenant, en outre, un liant inerte.

Le document US-A-4,957,514 divulgue un procédé de purification d'hydrogène mettant en oeuvre une zéolite X échangée de 60 à 80% avec des cations baryum.

En outre, le document US-A-5,489,327 concerne la purification d'hydrogène gazeux par mise en contact avec un hydrure d'alliage de zirconium.

Enfin, le document JP-A-860146024 décrit un procédé PSA pour purifier des gaz impurs utilisant une zéolite de type mordénite échangée au lithium, côté production et une autre zéolite, côté alimentation.

A l'inverse, certains documents soulignent que l'adsorbant ou les adsorbants mis en oeuvre dans un procédé PSA pour purifier de l'hydrogène n'ont que peu, voire même aucune importance.

Ainsi, le document Préssure Swing Adsorption, 1994, VCH publishers, D.M. Ruthvens, S. Farooq, K.S. Knaebel, page 238, enseigne que "puisque la sélectivité pour la plupart des impuretés est élevée en comparaison de celle pour l'hydrogène, n'importe quel adsorbant peut être utilisé" pour purifier de l'hydrogène.

De manière analogue, d'après le document US-A-4,299,596, tous les adsorbants conventionnels peuvent être utilisés pour produire de l'hydrogène, par exemples, les charbons actifs, les gels de silice, les tamis moléculaires, tels que les zéolites, les tamis carbonés...

Par ailleurs, le document US-A-4,482,361 cite la possibilité d'utiliser indifféremment des adsorbants adéquats, tels que les tamis moléculaires zéolitiques, les charbons actifs, les gels de silice, les alumines activées ou similaires.

De façon analogue, le document US-A-4,834,780 enseigne que l'adsorption peut être effectuée dans tous les cas où l'on a sélectionné un adsorbant adapté pour le procédé de séparation considéré, par exemple, les charbons actifs, les gels de silice, les alumines ou les tamis moléculaires.

Par ailleurs, le document US-A-5,275,640 enseigne la production d'azote à partir d'air par procédé PSA/VSA avec deux lits d'adsorbant carbonés successifs destinés à éliminer la vapeur d'eau du flux d'air d'alimentation.

En outre, le document US-A-5,726,118 propose un adsorbant composite formé d'un mélange intime de plusieurs charbons actifs différents utilisable en procédé PSA, TSA ou VSA pour séparer différents gaz ou liquides, notamment l'oxygène et l'hydrogène.

De façon générale, aucun de ces documents ne souligne l'importance du choix du charbon actif à mettre en oeuvre, ni ne souligne ou ne précise les caractéristiques auxquelles doivent répondre le ou les lits de charbon actif pour purifier efficacement le gaz à traiter.

Partant de là, le problème qui se pose alors est d'améliorer les procédés PSA de purification de gaz, en particulier de purification d'hydrogène, c'est-à-dire d'améliorer l'efficacité de l'élimination des impuretés contenues dans un flux gazeux, tel l'hydrogène, à purifier.

L'invention concerne alors un procédé pour la purification d'un flux de gaz contenant au moins une impureté gazeuse choisie dans le groupe formé par le $CO_2$, les hydrocarbures linéaires, ramifiés ou cycliques, saturés ou insaturés comportant au moins un atome de carbone dans leur structure hydrocarbonée, les mercaptans, le $H_2S$, le $SO_2$, le chlore, l'ammoniac, les alcools, les amines et les composés organiques volatils,

- dans lequel le flux gazeux à purifier est successivement mis en contact avec des particules d'un premier adsorbant carboné poreux et des particules d'un deuxième adsorbant carboné poreux, les particules desdits premier et deuxième adsorbants carbonés poreux formant des couches distinctes et successives, et
- dans lequel les particules dudit premier adsorbant carboné poreux sont définies par une première densité (D1), une première aire massique (AM1) et une première taille de pore moyenne (TM1), et les particules dudit deuxième adsorbant carboné poreux sont définies par une deuxième densité (D2), une deuxième aire massique (AM2) et une deuxième taille de pore moyenne (TM2), tel qu'au moins une des formules (1) à (3) suivantes soit vérifiée :

- D1 < D2    (1)
- AM1 >AM2    (2)
- TM1>TM2    (3)

Selon le cas, le procédé de l'invention peut aussi comprendre l'une ou plusieurs des caractéristiques suivantes :

- les particules dudit premier adsorbant carboné poreux sont définies par un premier volume poreux (VP1) et les particules dudit deuxième adsorbant carboné poreux sont définies par un deuxième volume poreux (VP2), le premier volume poreux (VP1) et le deuxième volume poreux (VP2) étant tels que la formule (4) suivante est vérifiée :

$$VP1 > VP2. \hspace{4cm} (4)$$

- les particules du premier adsorbant carboné poreux et les particules du deuxième adsorbant carboné poreux sont insérées au sein d'un même adsorbeur, en couches distinctes et successives.
- le rapport du volume de particules du premier adsorbant carboné poreux au volume de particules du deuxième adsorbant carboné poreux est compris entre 5 : 95 et 95 : 5, de préférence compris entre 5 : 95 et 20:80
- les premier et deuxième adsorbants carbonés poreux sont choisis parmi les charbons actifs, de préférence les charbons actifs produits à partir d'écorce de noix de coco, de tourbe, de lignite, de houille, d'anthracite, de polymères ou de résines. Lorsque le premier adsorbant carboné est obtenu à partir du même matériau précurseur que le deuxième adsorbant carboné, alors ledit premier adsorbant carboné a préférentiellement un taux d'activation supérieur audit deuxième adsorbant carboné.
- le flux gazeux est mis, en outre, en contact avec au moins un adsorbant particulaire zéolitique, de préférence la mise en contact du flux gazeux avec les particules de zéolite est opérée subséquemment à la mise en contact dudit flux gazeux avec les particules desdits premier et deuxième adsorbants carbonés poreux.
- la zéolite est de type zéolite X, A ou une faujasite échangée à au moins 70% au lithium ou au calcium, et/ou une zéolite de type faujasite dont le rapport Si/Al est compris entre environ 1 et 1,2.
- le flux gazeux est mis, en outre, en contact avec au moins un adsorbant formé de particules d'alumine activée ou de gel de silice, de préférence la mise en contact du flux gazeux avec les particules d'alumine activée ou de gel de silice est opérée préalablement à la mise en contact dudit flux gazeux avec les particules desdits premier et deuxième adsorbants carbonés poreux.
- il est de type PSA ou TSA et , de préférence, comprend de 2 à 12 adsorbeurs. Eventuellement, le ou les adsorbants peuvent être régénérés à l'aide d'un fluide chaud autre que le gaz à traiter ou qu'un flux produit dans l'unité d'adsorption, telle que de la vapeur d'eau.
- le flux gazeux est un flux d'hydrogène, en particulier un gaz de synthèse issu d'un reformage ou d'un craquage d'hydrocarbures ou d'alcools, tel le méthanol, ou de la gazéification de produits carbonés solides.
- le flux gazeux est un flux d'air ou d'azote.
- les particules du premier adsorbant carboné poreux sont définies par : un premier volume poreux (VP1) avec VP1 compris entre 0.5 et 1.5 $cm^3/g$, une première densité (D1) compris entre 350 et 500 $kg/m^3$, une première aire massique (AM1) comprise entre 500 et 1800 $m^2/g$, de préférence comprise entre 800 et 1500 $m^2/g$, et une première taille moyenne de pore (TM1) avec TM1 > 6 Angstrom, de préférence entre 7 et 15 Angstrom.
- les particules du deuxième adsorbant carboné poreux sont définies par : un deuxième volume poreux (VP2) avec VP2 compris entre 0.4 et 1.3 $cm^3/g$, une deuxième densité (D2) compris entre 400 et 650 $kg/m^3$, une deuxième aire massique (AM2) comprise entre 400 et 1500 $m^2/g$, de préférence comprise entre 600 et 1200 $m^2/g$, et une deuxième taille moyenne de pore (TM2) avec TM2>4 Angstrom, de préférence compris entre 5 et 11 Angstrom.
- les particules desdits premier et deuxième adsorbants carbonés poreux ont des granulométries moyennes différentes, de préférence la granulométrie des particules du premier adsorbant carboné poreux est comprise entre 2 mm et 5 mm et/ou la granulométrie des particules du deuxième adsorbant carboné poreux est comprise entre 1 mm et 3 mm.
- le gaz est du gaz naturel, un gaz de combustion ou de fermentation.
- la pression d'adsorption est comprise entre 5 bars et 70 bars, de préférence entre 15 bars et 40 bars,
- la pression de désorption est comprise entre 0.1 bar et 10 bars, de préférence entre 1 et 5 bars.
- la température du flux d'hydrogène à purifier est comprise entre -25 °C et + 60°C, de préférence entre + 5°C et + 35°C.
- l'adsorbant carboné poreux a des pores ayant une taille comprise entre 0.4 nm et 4 nm, préférentiellement entre 0.5 nm et 2 nm.
- il est de type PSA à plusieurs adsorbeurs, de préférence de 3 à 12 adsorbeurs.

- le flux de gaz à purifier contient, en outre, de la vapeur d'eau en tant qu'impureté gazeuse.

En effet, les inventeurs de la présente invention ont montré que, de façon surprenante, une amélioration notable de l'efficacité d'un procédé PSA de purification de gaz, en particulier d'un flux d'hydrogène, en les impuretés qu'il contient peut être obtenue grâce à un choix judicieux des différentes couches d'adsorbants carbonés, c'est-à-dire des charbons actifs, mises en oeuvre dans le procédé PSA.

En effet, bien qu'il soit habituel d'utiliser des particules de charbon actif pour éliminer certaines des impuretés contenues dans les flux d'hydrogène, jusqu'à présent, il n'avait jamais été mis en évidence que la succession de deux charbons actifs microporeux ayant des volumes de pores différents, des densités différentes, des aires massiques différentes et/ou des tailles moyennes de pores différentes a une influence notable sur les performances d'un procédé d'adsorption de type PSA pour purifier ou séparer un flux gazeux, en particulier un flux d'hydrogène gazeux.

Les charbons actifs selon la présente invention sont définis par la méthode ou théorie M.M. Dubunin, (voir par exemple F.Stoeckli et D. Morel : Chimia 34 (1980) N°12 (Décembre), ou bien M.M. Dubinin, Carbon, Vol 26, N°1, P.97, 1988.

Exemple

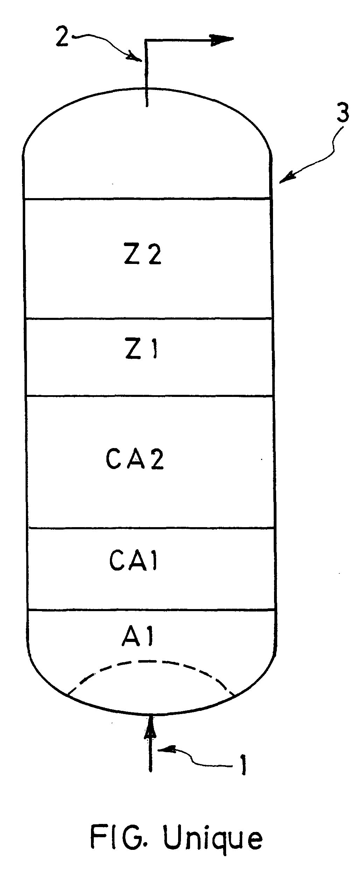

La figure annexée représente le schéma d'un des adsorbeurs d'une unité PSA de purification d'hydrogène selon l'invention, ladite unité PSA comprenant de 3 à 12 adsorbeurs agencés en parallèle (non détaillé).

Comme on le voit sur la figure, le flux d'hydrogène à purifier entrant (en 1) dans l'adsorbeur 3 est mis en contact, successivement et dans cet ordre, avec :

- une couche de particules d'alumine A1,
- une couche de particules du premier charbon actif (CA1) selon l'invention,
- une couche de particules du deuxième charbon actif (CA2) selon l'invention,
- une couche de particules d'une première zéolite (Z1), par exemple une zéolite 13X, Na-LSX ou Li-LSX, et
- une couche de particules d'une deuxième zéolite (Z2), par exemple une zéolite CaX, 5A, CaLSX ou BaLSX.

Ces différentes couches d'adsorbants permettent d'éliminer les impuretés contenues dans le flux d'hydrogène à purifier ; l'hydrogène purifié étant récupéré ensuite du côté sortie (en 2) de l'adsorbeur 3.

Plus précisément, le procédé de l'invention a été validé sur un gaz de synthèse, c'est-à-dire un flux gazeux à purifier composé d'environ 73 % d'$H_2$, de 24% de $CO_2$, et de 2 % de CO provenant d'un reformage à la vapeur de méthanol, tel que décrit notamment dans les documents EP-A-456544 ou EP-A-365387. Ce flux gazeux contient, en outre, environ 500 ppm à 1% d'autres impuretés, telles la vapeur d'eau, le méthane et les vapeurs d'alcools

Le cycle de principe de chacun des adsorbeurs du procédé PSA mis en oeuvre se décompose en quatre phases principales qui comportent chacune une ou plusieurs étapes :

- Phase 1 : phase de production
- Phase 2 : phase de dépressurisation (équilibrage et dépressurisation pour élution)
- Phase 3 : phase de purge et d'élution
- Phase 4: phase de recompression (recompression par équilibrage et recompression finale)

Le cycle se caractérise par une pression d'adsorption de 26 bars et une pression basse de 1,6 bars.

La puissance calorifique nécessaire à l'obtention du gaz de synthèse à partir de méthanol et d'eau liquide est fournie par la combustion du gaz résiduaire qui est utilisé à cette fin.

Le dimensionnement et le rendement du procédé PSA ont été déterminés à partir d'une unité pilote alimentée avec le même gaz de synthèse reconstitué mais exempt de toutes autres impuretés.

Un premier essai a été réalisé, à cette fin, avec un adsorbant constitué d'une couche de charbon actif représentant 75% du volume total d'adsorbant et d'une couche de zéolite 5A représentant 25% du volume total d'adsorbant, ce rapport 3/4 pour 1/4 ayant été trouvé optimal.

De là, les adsorbants utilisés selon ce rapport volumique ont été mis en oeuvre dans une unité industrielle PSA.

Après plusieurs cycles de production, il a été constaté que, pour l'unité industrielle considérée, le rendement en hydrogène obtenu était nettement inférieur à celui escompté et, après analyse, qu'une quantité importante d'alcool s'était accumulée dans le lit de charbon actif , en particulier dans sa partie inférieure.

Le rapprochement des deux observations a conduit à remplacer environ 10% de la couche de charbon actif par un autre charbon actif présentant un volume et/ou une taille de pore supérieur au charbon actif utilisé dans le premier essai.

En d'autres termes, un deuxième essai a été opéré dans les mêmes conditions mais en utilisant un lit composite comprenant successivement, depuis le côté entrée vers le côté sortie de l'adsorbeur, une couche de charbon actif à volume de pore supérieur (10% en vol.), une couche de charbon actif identique à celui de l'essai précédent (65% en vol.) et une couche de zéolite 5A identique à celui de l'essai précédent (25% en vol.).

Après plusieurs cycles de production, il a été constaté que le rendement en hydrogène obtenu dans ce deuxième essai était égal à celui attendu d'après les résultats pilote et, dans tous les cas, nettement supérieur de plusieurs pour cents au rendement obtenu dans l'essai précédent sur l'unité industrielle.

Des essais complémentaires ont montré que le remplacement en totalité de la couche de charbon actif utilisé dans le premier essai par une couche de charbon actif à volume de pore supérieur, tel qu'utilisé dans le deuxième essai, conduisait à une baisse notable des performances de l'unité PSA, ce qui tend à démontrer que c'est bien la succession des deux types de charbons actifs différents selon la présente invention qui permet d'améliorer le rendement de l'unité PSA de purification d'hydrogène.

Il apparaît donc que s'il est possible de produire de l'hydrogène pur avec l'un quelconque des charbons actifs, il y a un avantage incontestable, en particulier en termes de rendement, à utiliser conjointement les deux charbons actifs de nature différente.

Ceci peut s'expliquer par le fait que la couche de charbon actif à volume et/ou à taille de pore supérieur permet une meilleure désorption des impuretés les plus lourdes, telles les vapeurs d'alcools et les BTX, durant les phases de régénération de l'adsorbant du PSA.

En effet, la préoccupation commune à la base de tout procédé PSA est de pouvoir disposer d'adsorbants ayant une capacité d'adsorption élevée à pression haute et, en même temps, conduisant à une variation importante de capacité d'adsorption entre les pressions haute et basse du cycle.

Or, ces deux contraintes sont difficiles à concilier car, en général, lorsqu'on augmente la capacité d'adsorption à pression haute, on courbe en même temps l'isotherme de l'adsorbant considéré, ce qui conduit à diminuer le différentiel d'adsorption.

Parmi les différents charbons actifs accessibles dans le commerce, il a été constaté que les charbons actifs qui adsorbent efficacement les composés légers, tels le $CH_4$, adsorbent trop les composés lourds, tels les alcools et les BTX, alors qu'à l'inverse, les charbons actifs qui adsorbent de manière industriellement acceptable les composés lourds, c'est-à-dire qui permettent leur désorption, n'adsorbent pas assez les composés légers.

Donc, si l'on utilise un seul charbon actif (comme dans le premier essai) pour adsorber tous les composés, cela conduit à une situation dans laquelle les corps les moins adsorbables ont une faible capacité d'adsorption à haute pression, alors que les corps les plus facilement adsorbables ont une isotherme courbe qui correspond à une mauvaise désorption.

En pratique, cela se traduit par une situation où le lit unique de charbon actif sera, selon ses caractéristiques propres, soit empoisonné par les produits lourds non désorbables s'il est adapté aux produits légers, soit devra être surdimensionné pour adsorber les composés légers peu adsorbables, dans le cas où il est davantage adapté aux produits lourds.

Dans tous les cas, cela conduit à une perte de performances. Baisse de capacité par manque d'adsorbant et baisse de rendement à cause de l'hydrogène se trouvant dans la zone empoisonnée et perdu lors de la purge dans la première hypothèse, baisse de rendement en particulier par augmentation du volume libre interstitiel dans la deuxième hypothèse.

La mise en oeuvre de plusieurs couches ou lits de charbons actifs de natures différentes selon la présente invention permet de résoudre ce problème d'adsorption/désorption pour tous les composés présents dans le gaz à traiter, en éliminant graduellement tous les composés ou impuretés présents dans le gaz à purifier et ce, en commençant par les composés lourds et donc en laissant passer la majorité des composés les plus légers, le gaz purifié en lesdits composés lourds étant ensuite mis en contact avec un adsorbant apte à bien adsorber/désorber les composés légers. Il va.de soit que, dans certains cas, plus de deux lits de charbons actifs seront nécessaires, en particulier lorsque le flux gazeux à purifier est un mélange complexe, c'est-à-dire comprenant de nombreux composés gazeux différents.

Il s'ensuit que les essais ci-dessus mettent clairement en évidence qu'utiliser plusieurs couches de charbons actifs ayant des caractéristiques différentes selon la présente invention permet d'aboutir à une amélioration du rendement du procédé PSA, ainsi qu'à une diminution du volume total d'adsorbant.

Bien que les essais ayant conduit à l'invention aient été conduits sur une unité PSA $H_2$, le principe de l'invention s'applique dès lors que l'on utilise du charbon actif pour épurer un flux de gaz contenant diverses impuretés de nature différente. On peut citer, par exemple et de façon non limitative, l'épuration du $CO_2$ à partir de gaz de combustion ou de fermentation, ou encore la récupération du méthane et de $CO_2$ à partir de gaz naturel.

Par exemple, on peut citer le document US-A-4,840,647 qui décrit un procédé du premier type dans lequel on utilise un seul et unique lit de charbon actif pour purifier le gaz ou encore le document US-A-4,770,676 correspondant au deuxième type de procédé cité et mettant en oeuvre plusieurs lits d'adsorbant, en particulier du charbon actif à la fois dans le prétraitement et le PSA lui-même. Ce document n'apporte aucun renseignement sur les caractéristiques du ou des charbons actifs employés.

De la même manière, en fonction de la pression partielle d'une impureté dans un gaz à purifier, on peut être amené à utiliser tel ou tel charbon actif mieux adapté aux conditions de fonctionnement. Dans le cadre de l'invention, il peut être intéressant, même pour une seule impureté, de prévoir deux ou plusieurs lits de charbons actifs de caractéristiques différentes, le premier à l'amont voyant la pression partielle totale et le dernier, à l'aval du lit d'adsorbant, ne voyant que les traces de contaminants.

De façon analogue, la désorption des impuretés peut être obtenue par le simple fait de la diminution de pression, comme dans le cas d'un cycle PSA $H_2$, ou par élévation de la température. Dans ce dernier cas, on comprend que l'utilisation de deux charbons actifs différents peut faciliter la désorption des composés les plus lourds sur le premier charbon actif tout en ayant de bonnes capacités d'adsorption sur le second charbon actif vis-à-vis des contaminants plus volatils.

Dans le cadre de la présente invention, on peut utiliser des charbons actifs disponibles dans le commerce, à partir du moment où ceux-ci répondent aux conditions mises en évidence par la présente invention, ou des charbons actifs fabriqués spécifiquement pour telle ou telle utilisation.

Dans tous les cas, un charbon actif est habituellement préparé à partir d'un ou plusieurs précurseurs, tels que la tourbe, le coke, l'anthracite, la houille, l'écorce d'arbre, les noyaux de fruits ou les coquilles végétales, par exemple de noix de coco, d'amandes...

Le précurseur est d'abord traité pour en éliminer les impuretés, mis aux dimensions appropriées, activé, éventuellement broyé, puis extrudé à l'aide d'un liant à base carbonée, par exemple le brai.

Dans le cas des charbons physiques, le précurseur est soumis à une opération dite de carbonisation au cours de laquelle l'eau et les matières organiques volatiles, les composés aliphatiques, insaturés ou aromatiques, éventuellement oxygénés, soufrés ou azotés sont éliminés, de manière à obtenir un squelette résiduel essentiellement carboné non volatile (carbonisat) consistant en une structure poreuse, éventuellement partiellement ouverte, avec des domaines plus ou mois amorphes. La structure finale dépend du matériau de départ, de sa structure et composition chimique, du traitement opéré, de la vitesse de chauffe et de la température finale. Ensuite, la structure carbonée est soumise à une étape d'activation durant laquelle elle est soumise à une attaque chimique contrôlée dont le but est de créer une porosité interne ouverte de taille et de volume de pores déterminées. L'activation peut être obtenue par oxydation ménagée avec de l'air, du gaz carbonique ou de la vapeur d'eau. Durant cette activation, une partie de la matière carbonée de la structure carbonée est éliminée sous forme gazeuse et la porosité ouverte se développe en conséquence, ce qui permet d'augmenter le volume poreux accessible et la taille moyenne des pores. La structure finale dépend du précurseur et du carbonisat.

Dans le cas des charbons chimiques, le précurseur est mis en contact par imprégnation avec un réactif chimique, tel que NaOH, KOH, $ZnCl_2$ ou $H_3PO_4$, et le mélange ainsi obtenu est chauffé à une température d'au moins $500°C$ de façon à obtenir une attaque du précurseur par le réactif chimique et ainsi créer la porosité. Ensuite, le produit est refroidi à une température habituellement inférieure à $100°C$, lavé et éventuellement neutralisé avec une solution alcaline ou acide pour en éliminer les produits de réaction, et enfin séché.

Dans tous les cas, la structure finale dépend du matériau de départ, de sa carbonisation et de son activation.

La détermination quantitative de la structure poreuse peut être caractérisée par exemple en utilisant l'aire massique suivant la méthode BET donnée dans J. Am. ; Chem. Soc., vol 60, 1938, p 309, le volume microporeux suivant la théorie de Dubinin consignée dans Chem. Rev. vol 60, 1960, p235-241, la taille des pores à partir de la théorie de Dubinin, dans Carbon, 1988, vol 26, p 97, ou la distribution de taille des pores par extension de la méthode de Dubinin, ainsi qu'expliqué dans Carbon 1988, vol 26, p6, ou Carbon 1985, vol 23, p373.

Ainsi, si l'on connaît la distribution de taille des pores différentielle, par exemple en considérant les pores inférieurs à une valeur $d_1$, compris entre la valeur $d_1$ et la valeur $d_2$, compris entre la valeur $d_2$ et la valeur $d_3$.....etc.... et supérieurs à une valeur $d_n$, et leurs pourcentages volumiques respectifs $v_1$, $v_2$, $v_3$...$v_n$, on définit alors taille moyenne TM comme suit :

$$TM = (\ (\ (v_1.d_1) + (0.5.\ v_2.(d_1 + d_2)) + (0.5.\ v_3.\ (d_2 + d_3)\ ) + .....v_{n+1}.d_n\ ))\ /(v_1 + v_2... + v_{n+1})$$

La distribution poreuse différentielle peut être aussi obtenue sous forme continue d(r) et, dans ce cas, l'équation qui donne TM est une intégrale :

$$TM = \frac{\int\limits_0^\infty d(r) \times r \times dr}{\int\limits_0^\infty d(r) \times dr}$$

L'homme de l'art sait que la structure poreuse évolue de manière complexe en fonction du taux de carbonisation, c'est-à-dire de la quantité de carbone éliminée par activation, ainsi qu'expliqué par T. Wigmans dans "Activated carbon, a fascinating material", Capelle & de Vooys Editeurs, 1983, p 58-80. De manière générale, le premier adsorbant carboné, s'il est obtenu à partir du même matériau de départ et activé suivant la même méthode, sera à un taux d'activation supérieur au deuxième.

Par exemple, l'invention peut être mise en oeuvre en utilisant deux charbons actifs commercialisés par la Société NORIT sous les références RX et RB, lesquels ont les caractéristiques données dans le tableau suivant.

Tableau

| | Charbon actif RX | Charbon actif RB |
|---|---|---|
| Densité (kg/m$^3$) | 410 | 460 |
| Micropores < 1 nm (cm$^3$/g) | 0.48 | 0.36 |
| Pores de transition > 1 nm et < 100 nm (cm$^3$/g) | 0.09 | 0.08 |
| Macropores > 100 nm (cm$^3$/g) | 0.47 | 0.41 |
| Volume total des pores (cm$^3$/g) | 1.04 | 0.85 |
| Aire massique (BET) (m$^2$/g) | 1250 | 1000 |

De façon générale, il n'est pas nécessaire que les deux couches de charbons actifs différents successives soient immédiatement en contact l'une avec l'autre, celles-ci peuvent être espacées l'une de l'autre, voire même éventuellement séparées l'une de l'autre par un adsorbant de nature différente, c'est-à-dire un adsorbant placé en sandwich entre deux couches de charbons actifs différents.

En outre, la modification des caractéristiques physiques peut être graduelle, c'est-à-dire obtenue par mélange en proportions variables de différents charbons actifs.

De même, la forme et la granulométrie des différentes couches de charbons actifs peuvent être identiques ou différentes et lesdites différentes couches de charbons actifs peuvent être placées dans des récipients distincts même si l'on préfère les placer au sein d'un même adsorbeur.

L'invention n'est pas limitée à la purification d'hydrogène mais elle s'applique aussi à la purification d'autres gaz, en particulier de l'air, l'azote, le CO le $CH_4$ et le $CO_2$ dès lors que les impuretés à arrêter présentent des caractéristiques d'adsorption vis-à-vis de du charbon suffisamment différentes.

## Revendications

1. Procédé pour la purification d'un flux de gaz contenant au moins une impureté gazeuse choisie dans le groupe formé par le $CO_2$, les hydrocarbures linéaires, ramifiés ou cycliques, saturés ou insaturés comportant au moins un atome de carbone dans leur structure hydrocarbonée, les mercaptans, le $H_2S$, le $SO_2$, le chlore, l'ammoniac, les alcools, les amines et les composés organiques volatils,

   - dans lequel le flux gazeux à purifier est successivement mis en contact avec des particules d'un premier adsorbant carboné poreux et des particules d'un deuxième adsorbant carboné poreux, les particules desdits premier et deuxième adsorbants carbonés poreux formant des couches distinctes et successives, et
   - dans lequel les particules dudit premier adsorbant carboné poreux sont définies par une première densité (D1), une première aire massique (AM1) et une première taille de pore moyenne (TM1), et les particules dudit deuxième adsorbant carboné poreux sont définies par une deuxième densité (D2), une deuxième aire massique (AM2) et une deuxième taille de pore moyenne (TM2), tel qu'au moins une des formules (1) à (3) suivantes soit vérifiée :

- D1 < D2     (1)
- AM1>AM2     (2)
- TM1>TM2     (3)

2. Procédé selon la revendication 1, caractérisé en ce que les particules dudit premier adsorbant carboné poreux sont définies par un premier volume poreux (VP1) et les particules dudit deuxième adsorbant carboné poreux sont définies par un deuxième volume poreux (VP2), le premier volume poreux (VP1) et le deuxième volume poreux (VP2) étant tels que la formule (4) suivante est vérifiée:

$$VP1 > VP2. \hspace{3cm} (4)$$

3. Procédé selon l'une des revendications 1 ou 2, caractérisé en ce que le rapport du volume de particules du premier adsorbant carboné poreux au volume de particules du deuxième adsorbant carboné poreux est compris entre 5 : 95 et 95 : 5, de préférence compris entre 5 : 95 et 20:80.

4. Procédé selon l'une des revendications 1 à 3, caractérisé en ce que les premier et deuxième adsorbants carbonés poreux sont choisis parmi les charbons actifs, de préférence les charbons actifs produits à partir d'écorce de noix de coco, de tourbe, de lignite, de houille, d'anthracite, de polymères ou de résines.

5. Procédé selon l'une des revendications 1 à 4, caractérisé en ce que le flux gazeux est mis, en outre, en contact avec au moins un adsorbant particulaire zéolitique, de préférence la mise en contact du flux gazeux avec les particules de zéolite est opérée subséquemment à la mise en contact dudit flux gazeux avec les particules desdits premier et deuxième adsorbants carbonés poreux.

6. Procédé selon la revendication 5, caractérisé en ce que la zéolite est de type zéolite X, A ou une faujasite échangée à au moins 70% au lithium ou au calcium, et/ou une zéolite de type faujasite dont le rapport Si/Al est compris entre environ 1 et 1,2.

7. Procédé selon l'une des revendications 1 à 6, caractérisé en ce que le flux gazeux est mis, en outre, en contact avec au moins un adsorbant formé de particules d'alumine activée ou de gel de silice, de préférence la mise en contact du flux gazeux avec les particules d'alumine activée ou de gel de silice est opérée préalablement à la mise en contact dudit flux gazeux avec les particules desdits premier et deuxième adsorbants carbonés poreux.

8. Procédé selon l'une des revendications 1 à 7, caractérisé en ce qu'il est de type PSA ou TSA et, de préférence, comprend de 2 à 12 adsorbeurs.

9. Procédé selon l'une des revendications 1 à 8, caractérisée en ce que le flux gazeux est un flux d'hydrogène, en particulier un gaz de synthèse issu d'un reformage ou d'un craquage d'hydrocarbures ou d'alcools, ou de la gazéification de produits carbonés solides.

10. Procédé selon l'une des revendications 1 à 9, caractérisé en ce que le flux gazeux est un flux d'air ou d'azote.

11. Procédé selon l'une des revendications 1 à 10, caractérisé en ce que les particules du premier adsorbant carboné poreux sont définies par :

- un premier volume poreux (VP1 ) avec VP1 compris entre 0.5 et 1.5 $cm^3/g$,
- une première densité (D1 ) compris entre 350 et 500 $kg/m^3$,
- une première aire massique (AM1) comprise entre 500 et 1800 $m^2/g$, de préférence comprise entre 800 et 1500 $m^2/g$, et
- une première taille moyenne de pore (TM1) avec TM1 > 6 Angström, de préférence entre 7 et 15 Angström.

12. Procédé selon l'une des revendications 1 à 11, caractérisé en ce que les particules du deuxième adsorbant carboné poreux sont définies par :

- un deuxième volume poreux (VP2) avec VP2 compris entre 0.4 et 1.3 $cm^3/g$,

9

- une deuxième densité (D2) compris entre 400 et 650 kg/m³,
- une deuxième aire massique (AM2) comprise entre 400 et 1500 m²/g, de préférence comprise entre 600 et 1200 m²/g, et
- une deuxième taille moyenne de pore (TM2) avec TM2>4 Angström, de préférence compris entre 5 et 11 Angström.

13. Procédé selon l'une des revendications 1 à 12, caractérisé en ce que les particules desdits premier et deuxième adsorbants carbonés poreux ont des granulométries moyennes différentes, de préférence la granulométrie des particules du premier adsorbant carboné poreux est comprise entre 2 mm et 5 mm et/ou la granulométrie des particules du deuxième adsorbant carboné poreux est comprise entre 1 mm et 3 mm.

14. Procédé selon l'une des revendications 1 à 13, caractérisé en ce que le gaz est du gaz naturel, un gaz de combustion ou de fermentation.

15. Procédé selon l'une des revendications 1 à 14, caractérisé en ce que les particules des premier et deuxième adsorbants carbonés poreux forment des couches distinctes et successives au sein d'un même adsorbeur.

16. Procédé selon l'une des revendications à 15, caractérisé en ce que le flux de gaz à purifier contient, en outre, de la vapeur d'eau en tant qu'impureté gazeuse,

FIG. Unique

| | Office européen des brevets | **RAPPORT DE RECHERCHE EUROPEENNE** | Numéro de la demande |
|---|---|---|---|
| | | | EP 01 40 0003 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | US 5 275 640 A (HEIMBACH HEINRICH ET AL) 4 janvier 1994 (1994-01-04) * colonne 2, ligne 17 - ligne 50; revendication 1 * --- | 1-4,7,8, 10,15,16 | B01D53/04 B01J20/20 B01J20/28 |
| D,X A | US 5 726 118 A (HOFFMAN TIMOTHY C ET AL) 10 mars 1998 (1998-03-10) * colonne 2, ligne 27 - ligne 37; revendication 7 * --- | 1,4, 11-13 8,9 | |
| D,X A | US 5 505 764 A (FUENTES FRANCOIS) 9 avril 1996 (1996-04-09) * abrégé; exemples 1,2 * --- | 1,2,15 5-9 | |
| A | US 4 931 071 A (KAPLAN ROBERT H ET AL) 5 juin 1990 (1990-06-05) * revendications 5-8 * ----- | 1-3,13, 15 | |

| | | | DOMAINES TECHNIQUES RECHERCHES (Int.Cl.7) |
|---|---|---|---|
| | | | B01D B01J |

Le présent rapport a été établi pour toutes les revendications

| Lieu de la recherche | Date d'achèvement de la recherche | Examinateur |
|---|---|---|
| LA HAYE | 11 mai 2001 | Faria, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                     EP 01 40 0003

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-05-2001

| Document brevet cité au rapport de recherche | Date de publication | Membre(s) de la famille de brevet(s) | Date de publication |
|---|---|---|---|
| US 5275640 A | 04-01-1994 | DE 3941487 C | 25-04-1991 |
| | | AT 109997 T | 15-09-1994 |
| | | CA 2072651 A | 16-06-1991 |
| | | DE 59006854 D | 22-09-1994 |
| | | DK 505398 T | 26-09-1994 |
| | | WO 9108823 A | 27-06-1991 |
| | | EP 0505398 A | 30-09-1992 |
| | | ES 2059105 T | 01-11-1994 |
| | | JP 7087888 B | 27-09-1995 |
| | | JP 4506318 T | 05-11-1992 |
| US 5726118 A | 10-03-1998 | AUCUN | |
| US 5505764 A | 09-04-1996 | FR 2718979 A | 27-10-1995 |
| | | CA 2147212 A | 21-10-1995 |
| | | DE 69501094 D | 08-01-1998 |
| | | DE 69501094 T | 04-06-1998 |
| | | EP 0678322 A | 25-10-1995 |
| US 4931071 A | 05-06-1990 | AUCUN | |

Pour tout renseignement concernant cette annexe : voir Journal Officiel de l'Office européen des brevets, No.12/82